(19) Europäisches Patentamt
European Patent Office
Office européen des brevets

(11) EP 4 542 669 A1

(12) EUROPEAN PATENT APPLICATION

(43) Date of publication:
23.04.2025 Bulletin 2025/17

(21) Application number: 23216324.6

(22) Date of filing: 13.12.2023

(51) International Patent Classification (IPC):
H01M 4/131 $^{(2010.01)}$  H01M 4/36 $^{(2006.01)}$
H01M 4/58 $^{(2010.01)}$  H01M 10/052 $^{(2010.01)}$
H01M 10/0568 $^{(2010.01)}$  H01M 10/0569 $^{(2010.01)}$

(52) Cooperative Patent Classification (CPC):
H01M 4/131; H01M 4/364; H01M 4/5825;
H01M 10/052; H01M 10/0568; H01M 10/0569;
H01M 2004/028

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.10.2023 CN 202311373366

(71) Applicant: AESC Japan Ltd.
Yokohama-Shi, Kanagawa 220-0012 (JP)

(72) Inventor: GE, Yongjun
Jiangyin City, Wuxi City, 214443 (CN)

(74) Representative: Becker, Eberhard
Becker Kurig & Partner
Patentanwälte mbB
Bavariastraße 7
80336 München (DE)

(54) SECONDARY BATTERY

(57) A secondary battery belonging to the technical field of batteries is provided. The secondary batter includes a positive electrode sheet, a separator, and a negative electrode sheet. The positive electrode sheet includes a positive electrode material including a first active material and a second active material. The first active material is a layered structure material, and the second active material is an olivine structure material. A mass ratio of the second active material to a sum of masses of the first active material and the second active material is 5 wt% to 30 wt%. A discharge curve of the secondary battery has a first voltage platform and a second voltage platform.

FIG. 1

EP 4 542 669 A1

**Description**

**BACKGROUND**

Technical Field

The disclosure relates to the technical field of secondary batteries, and in particular, relates to a secondary battery.

Description of Related Art

With the advancement of science and technology and the growing needs to improve environmental protection, electrochemical devices (e.g., lithium-ion batteries) have entered people's daily lives. With the widespread popularity of lithium-ion batteries, the safety performance of such batteries has attracted increasing attention, especially due to some combustion and explosion incidents of electric vehicles. As a result, users, after-sales parties, and lithium-ion battery manufacturers have all put forward new requirements for the safety performance of lithium-ion batteries. In this regard, various countries have also introduced more stringent laws and regulations. Based on the safety status of lithium batteries at present, it is necessary to make some improved designs for the safety of lithium batteries.

At present, ternary materials serve as the positive electrode materials for lithium-ion batteries, and ternary materials have outstanding advantages such as high energy density, high voltage platform, ideal crystal structure, small self-discharging, and no memory effect. Ternary materials are now commonly used in lithium-ion batteries. However, there are flaws in the high-temperature performance of ternary materials, and the rate performance and structural stability of ternary materials are not as good as those of lithium iron phosphate. Therefore, compared to lithium iron phosphate lithium-ion batteries, the manufactured ternary material lithium-ion batteries have poorer high-temperature performance, cycle performance, and structural stability.

Therefore, there is a need to design a secondary battery capable of improving the safety performance of batteries using ternary materials as the main positive electrode material to solve the above problems.

**SUMMARY**

In view of the abovementioned shortcomings of the related art, the disclosure provides a secondary battery to solve the technical problem of poor safety performance of currently-available secondary batteries in the ternary system.

To achieve the above and other related purposes, the disclosure provides a secondary battery including a positive electrode sheet, a separator, and a negative electrode sheet. The positive electrode sheet includes a positive electrode material including a first active material and a second active material.

Herein, the first active material is a layered structure material. The second active material is an olivine structure material. A mass ratio of the second active material to a sum of masses of the first active material and the second active material is 5 wt% to 30 wt%. A discharge curve of the secondary battery has a first voltage platform and a second voltage platform. A measured voltage y of the secondary battery satisfies a relationship of $y1_{min} < y < y1_{max}$ or $y2_{min} < y < y2_{max}$, and y1 and y2 satisfy formulas (1) and (2):

$$y1 = 0.5265a + d \qquad (1)$$

$$y2 = -0.5265b + c \qquad (2),$$

where a is a mass ratio of the first active material to the sum of the masses of the first active material and the second active material, b is the mass ratio of the second active material to the sum of the masses of the first active material and the second active material, c is the first voltage platform where the first active material participates in discharge, the first voltage platform is 3.7143 V to 3.7743 V, d is the second voltage platform where the second active material participates in discharge, and the second voltage platform is 3.1878V to 3.2478V.

In an embodiment of the disclosure, a curve ratio specific value of the second active material participating in discharge in the discharge curve is 80% to 87% of the mass ratio b.

In an embodiment of the disclosure, a curve ratio of the second active material participating in the discharge curve is 4% to 25%.

In an embodiment of the disclosure, the layered structure material is $LiNi_xCo_yM_{1-x-y}O_2$, where $0 < x < 1$, $0 < y < 1$, and the M element includes one or more of Mn, Ti, Zr, Al, Sn, Zn, Mg, Cu, In, Ga, and Ta.

In an embodiment of the disclosure, the olivine structure material is $LiFe_zG_{1-z}PO_4$, where $0 < z < 1$, and the G element includes one or more of Mn, Ti, Zr, Al, Sn, Zn, Mg, Cu, In, Ga, and Ta.

In an embodiment of the disclosure, an average particle size D50 of the first active material is 0.5 $\mu$m to 5 $\mu$m, and an average particle size D50 of the second active material is 0.3 $\mu$m to 3 $\mu$m.

In an embodiment of the disclosure, the first active material is single crystal and/or polycrystalline.

In an embodiment of the disclosure, a degree of orientation of the positive electrode sheet is 70 to 99, and a degree of orientation of the negative electrode sheet is 10 to 60.

In an embodiment of the disclosure, a compaction density of the positive electrode sheet is 3.0 g/cm$^3$ to 3.6 g/cm$^3$, and a surface density of the positive electrode sheet coated on one side is 0.014 g/cm$^2$ to 0.02 g/cm$^2$.

In an embodiment of the disclosure, a compaction density of the negative electrode sheet is 1.1 g/cm$^3$ to 1.7 g/cm$^3$, and a surface density of the negative electrode sheet coated on one side is 0.008 g/cm$^2$ to 0.013 g/cm$^2$.

In the secondary battery provided by the disclosure, by mixing the olivine structure material into the positive electrode material mainly composed of the layered structure material, two stages of discharge voltage platforms are introduced during the discharge process of the secondary battery. In this way, during discharging, the secondary battery can transition from discharging at a higher first voltage platform to discharging at a lower second voltage platform. As a result, while the voltage and capacity of the secondary battery are improved, the discharge depth of the layered structure material is reduced, so the thermal stability of the secondary battery is improved. The battery is prevented from thermal runaway when being excessively charged and discharged, so that the safety performance of the secondary battery is improved. Therefore, some practical problems in the related art are effectively overcome, so that the disclosure exhibits high utilization value and use significance.

## BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are merely some embodiments of the disclosure, and for a person having ordinary skill in the art, other drawings can be obtained based on these drawings without inventive effort.

FIG. 1 is a graph of discharge curve testing of a secondary battery according to some embodiments of the disclosure.
FIG. 2 is a graph of a relationship between a measured voltage of the secondary battery and a mass ratio of a first active material according to some embodiments of the disclosure.
FIG. 3 is a graph of a relationship between the measured voltage of the secondary battery and a mass ratio of a second active material according to some embodiments of the disclosure.
FIG. 4 is an XRD test graph of a positive electrode sheet of the secondary battery according to an embodiment of the disclosure.
FIG. 5 is an XRD test graph of a negative electrode sheet of the secondary battery according to an embodiment of the disclosure.

## DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure. Note that the following embodiments and the features in the embodiments may be combined with each other in the case of no conflict. It should also be understood that the terminology used in the embodiments of the disclosure is for describing a specific implementation, but not for limiting the protection scope of the disclosure. The test methods for which specific conditions are not indicated in the following embodiments are usually in accordance with conventional conditions or in accordance with the conditions suggested by each manufacturer.

It should be noted that terms such as "upper", "lower", "left", "right", "middle" and "one" quoted in this specification are only for the convenience of description and are not used to limit the applicable scope of the disclosure. The change or adjustment of its relative relationship should also be regarded as the applicable scope of the disclosure without substantive change of the technical content.

Through research, the inventors find that although secondary batteries using ternary layered materials as positive electrode materials have the advantages of high energy density and high discharge voltage platform, there are hidden dangers in the safety performance of secondary batteries due to the poor thermal stability of ternary materials. To be specific, during an excessive-discharge process at high voltage, Ni$^{4+}$ ions in the ternary material will be reduced to Ni$^{2+}$, and at the same time, in order to maintain charge neutrality, O$^{2-}$ is oxidized and escapes from the crystal lattice. With the escape of a large amount of oxygen, a large number of oxygen vacancies will be generated, so that activation energy barrier for transition metal cation migration is reduced, and the phase transition process of the material from layered structure to spinel structure and rock salt phase structure is accelerated. The release of oxygen and the structural degradation of the positive electrode material form a vicious cycle, affecting the thermal runaway temperature of the battery. As a result, the thermal stability of the battery decreases, which in turn leads to safety risks.

It thus can be seen that if the positive electrode material is at a higher discharge voltage platform for a long period of time during the discharge process, the irreversible structural collapse of the layered structure material will be aggravated. The layered structure material will produce a large amount of gas and reduce the activation energy barrier as the structure collapses. This causes the layered structure of the positive electrode material to continue to collapse during the discharge process, which in turn causes the battery's thermal runaway temperature to drop rapidly.

Therefore, in order to solve the above problems, the disclosure provides a secondary battery. In this secondary battery, an olivine structure material is mixed into a positive electrode material mainly formed by a layered structure material. By mixing the olivine structure material in the layered structure material, the storage voltage capacity of the secondary battery is improved, and at the same time, two stages of discharge voltage platforms are introduced during the discharge process. During discharging, the secondary battery can transition from discharging at a higher first voltage platform to discharging at a lower second voltage platform. In this way, a discharge depth of the layered structure material is effectively reduced under a high voltage platform, the structural thermal stability of the positive electrode material is improved, and the thermal runaway temperature of the battery is prevented from rapidly falling due to excessive discharge.

The disclosure provides a secondary battery including a positive electrode sheet, a negative electrode sheet, an electrolyte, a separator, and corresponding a communication accessories and circuits. Herein, the positive electrode sheet includes a positive electrode current collector and a positive electrode active material layer disposed on the positive electrode current collector, and the positive electrode active material layer includes a positive electrode material. The negative electrode sheet includes a negative electrode current collector and a negative electrode active material layer disposed on the negative electrode current collector, and the negative electrode active material layer includes a negative electrode material. Herein, the negative electrode material may be a carbon-based material (e.g., graphite, hard carbon, or soft carbon), a silicon-based material (e.g., silicon oxide), or a carbon-silicon composite material. In the secondary battery, the positive and negative electrode materials may deintercalate lithium ions to achieve energy storage and release. The electrolyte is a carrier for lithium ions to be transported between the positive electrode sheet and the negative electrode sheet. The separator is permeable to lithium ions but does not conduct electricity, thereby separating the positive electrode sheet and the negative electrode sheet to prevent short circuit. Generally, the positive electrode material and the negative electrode material are crucial to key performance factors such as the energy storage function of a lithium battery, the energy density of its cell, cycle performance, and safety.

In the secondary battery, the positive electrode material includes a first active material and a second active material. The first active material is a layered structure material, such as lithium cobalt oxide, lithium nickel cobalt manganate, or lithium nickel cobalt aluminate. The second active material is an olivine structure material, such as lithium iron phosphate or lithium iron manganese phosphate. In the positive electrode material, a mass ratio of the first active material to a sum of masses of the first active material and the second active material is 70 wt% to 95 wt%. A mass ratio of the second active material to the sum of the masses of the first active material and the second active material is 5 wt% to 30 wt%. For instance, in some embodiments, the mass ratio of the first active material is 95 wt%, 90 wt%, 85 wt%, 80 wt%, 75 wt%, or 70 wt%, and correspondingly, the mass ratio of the second active material is 5 wt%, 10 wt%, 15 wt%, 20 wt%, 25 wt%, or 30 wt%.

In the disclosure, the first active material and the second active material may further include non-metal elements. For instance, the non-metal elements include at least one of fluorine, phosphorus, boron, chlorine, silicon, or sulfur, and these elements may further improve the stability of the positive electrode active material.

It should be noted that the material form of the first active material may not be limited. For instance, the first active material may be single crystal, polycrystalline, or a mixture of single crystal and polycrystalline. In some embodiments, the first active material is polycrystalline.

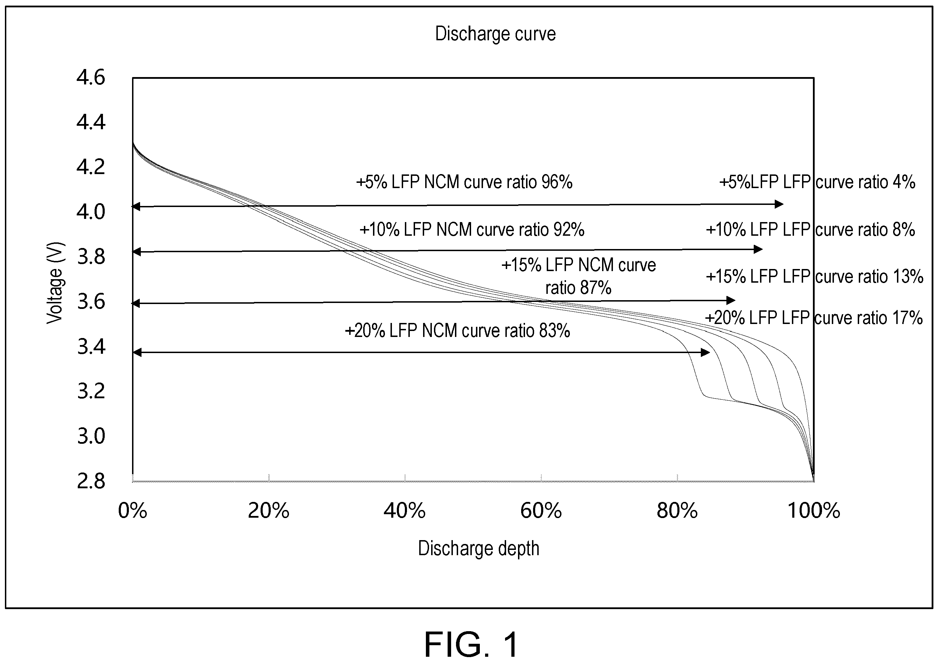

As shown in FIG. 1 to FIG. 3, since the positive electrode material of the secondary battery includes the layered structure material and the olivine structure material, a discharge curve of the secondary battery has a first voltage platform with a higher voltage and a second voltage platform with a lower voltage. A measured voltage y during the discharge process of the secondary battery is between the first voltage platform and the second voltage platform. The measured voltage is the working voltage of the secondary battery during discharge, which usually refers to the potential difference between the positive and negative electrodes of the battery under normal operating conditions. To be specific, the measured voltage y of the secondary battery satisfies a relationship of $y1_{min} < y < y1_{max}$ or $y2_{min} < y < y2_{max}$, and y1 and y2 satisfy formulas (1) and (2):

$$y1 = 0.5265a + d \qquad (1)$$

$$y2=-0.5265b+c \qquad (2),$$

where a is the mass ratio of the first active material to the sum of the masses of the first active material and the second active material, b is the mass ratio of the second active material to the sum of the masses of the first active material and the second active material, c is the first voltage platform where the first active material participates in discharge, the first voltage platform is 3.7143 V to 3.7743 V, d is the second voltage platform where the second active material participates in discharge, and the second voltage platform is 3.1878V to 3.2478V.

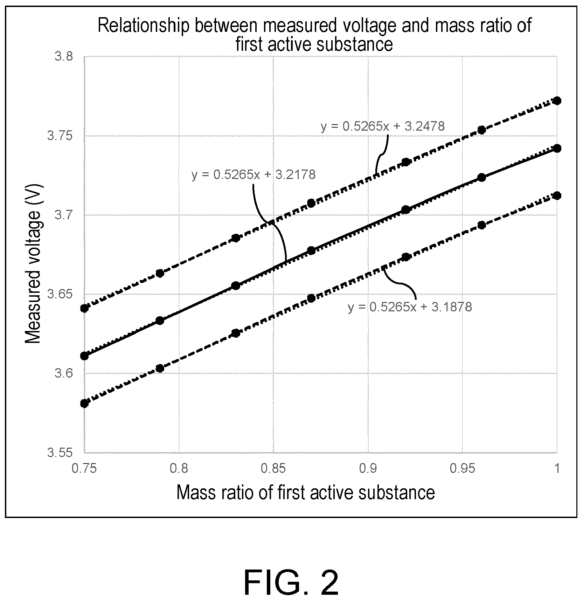

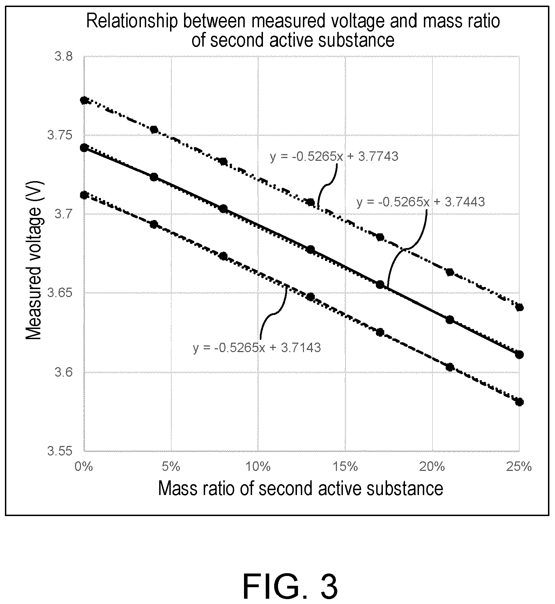

To be specific, as shown in FIG. 2 and FIG. 3, the measured voltage y of the secondary battery satisfies $y1_{min} < y < y1_{max}$, where $y1_{min}=0.5265a+3.1878$ and $y1_{max}=0.5265a+3.2478$. Alternatively, the measured voltage y of the secondary battery satisfies $y2_{min}<y<y2_{max}$, where $y2_{min}=-0.5265b+3.7143$ and $y2_{max}=-0.5265b+3.7743$.

As shown in FIG. 1 to FIG. 3, the mixed layered structure material and the olivine structure material in the positive electrode material not only introduces the first voltage platform and the second voltage platform during the discharge process of the secondary battery, but also ensures that the measured voltage of the secondary battery does not attenuate excessively. The measured voltage of the secondary battery in discharge is maintained at 3.55V to 3.75V based on the change in the mass ratio b of the second active material. For instance, in the positive electrode material, when the mass ratio of the second active material to the sum of the masses of the first active material and the second active material is 5 wt%, 10 wt%, 15 wt%, 20 wt%, 25 wt%, or 30 wt%, the corresponding measured voltage of the secondary battery in discharge is 3.72V, 3.70V, 3.68V, 3.66V, 3.63V, or 3.61V respectively. Under this working voltage range, the secondary battery can still maintain high discharge efficiency.

As shown in FIG. 1 to FIG. 3, in the discharge curve of the secondary battery, a proportion of the curve occupied by the introduced second voltage platform is positively correlated with a mass content of the olivine structure material mixed in the positive electrode material. In some embodiments, a curve ratio of the second active material participating in discharge in the discharge curve is 80% to 87% of the mass ratio b of the second active material. For instance, in some examples, when the mass ratio b of the second active material in the positive electrode material is 5 wt% to 30 wt%, the curve ratio of the second active material participating in discharge is 4% to 25%. In the secondary battery, as the mass ratio of the positive electrode material mixed with the olivine structure material increases, the discharge depth of the second voltage platform in the discharge curve increases, so the thermal runaway temperature of the secondary battery also raises, and the thermal stability performance of the battery is significantly improved.

In some embodiments, the layered structure material is $LiNi_xCo_yM_{1-x-y}O_2$, where $0<x<1$ and $0<y<1$. In some embodiments, the M element is selected from one or more combinations of Mn, Ti, Zr, Al, Sn, Zn, Mg, Cu, In, Ga, and Ta. That is, the M element may be any one of the elements listed above, such as Mn, Ti, Zr, Al, Sn, Zn, Mg, Cu, In, Ga, or Ta, etc. The M element may also be any two or more combinations of the element types listed above. For instance, the M element is a combination of Mn and Zr, a combination of Mn and Mg, a combination of Al and Ti, a combination of Al and Zn, a combination of Mn, Al, and Ga, or a combination of Mn, Al, Cu, and Mg, etc., which are not listed herein one by one.

The olivine structural material is $LiFe_zG_{1-z}PO_4$, where $0<z<1$. In some embodiments, the G element is selected from one or more combinations of Mn, Ti, Zr, Al, Sn, Zn, Mg, Cu, In, Ga, and Ta. That is, the G element may be any one of the elements listed above, such as Mn, Ti, Zr, Al, Sn, Zn, Mg, Cu, In, Ga, or Ta, etc. The G element may also be any two or more combinations of the element types listed above. For instance, the G element is a combination of Mn and Zr, a combination of Mn and Mg, a combination of Al and Ti, a combination of Al and Zn, a combination of Mn, Al, and Ga, or a combination of Mn, Al, Cu, and Mg, etc., which are not listed herein one by one.

In addition, when the M element and the G element are two or more combinations, there is no limitation on the proportion of each element in the combination, and the elements may be mixed in any proportion, etc. In other embodiments, the M element and the G element may also be element types not listed above.

In some embodiments, an average particle size D50 of the first active material is 0.5 μm to 5 μm, for example, the average particle size D50 of the first active material may be 0.5 μm, 1 μm, 1.5 μm, 2 μm, 2.5 μm, 3 μm, 3.5 μm, 4 μm, 4.5 μm, or 5 μm. An average particle size D50 of the second active material is 0.3 μm to 3 μm, for example, the average particle size D50 of the second active material may be 0.3 μm, 0.5 μm, 0.7 μm, 1 μm, 1.3 μm, 1.5 μm, 1.7 μm, 2 μm, 2.3 μm, 2.5 μm, 2.7 μm, or 3 μm.

Herein, within the above particle size range, the particle size distributions of the first active material and the second active material overlap with each other. The positive electrode material has good uniformity after being mixed and rolled by the first active material and the second active material, and a contact interface between the first active material and the second active material mixed in the positive electrode material has good affinity. In this way, the conductive efficiency of the positive electrode material is ensured, and the structural stability of the positive electrode material is also improved, so the thermal safety performance of the secondary battery is further improved.

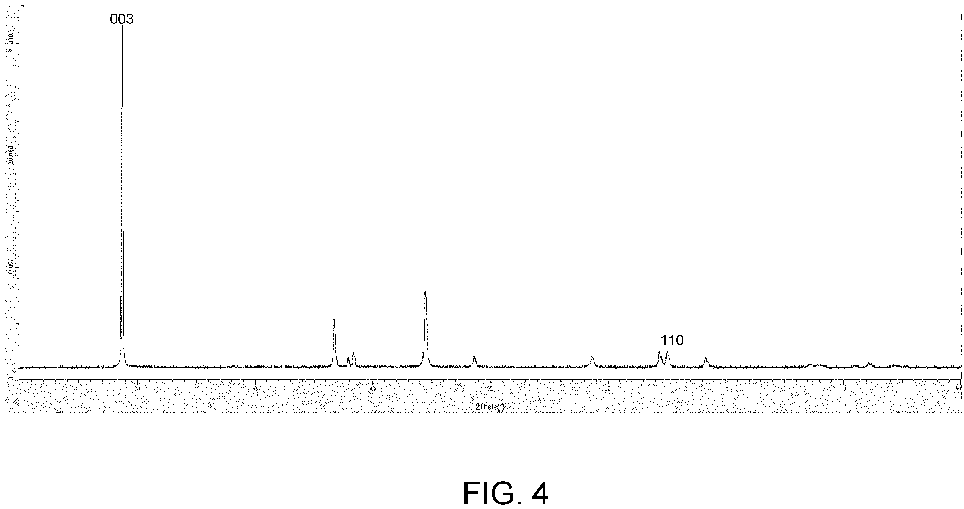

In some embodiments, a degree of orientation of the positive electrode sheet is 70 to 99, for example, the degree of orientation of the positive electrode sheet may be 70, 75, 80, 85, 90, 95, or 99. Herein, as shown in FIG. 4, the degree of orientation of the positive electrode sheet is Qc=C003/C110. C003 is a peak area of the 003 characteristic diffraction peak in the X-ray diffraction spectrum of the positive electrode sheet, and C110 is a peak area of the 110 characteristic diffraction peak in the X-ray diffraction spectrum of the positive electrode sheet. An angle of diffraction of the 003 characteristic peak ranges from 17° to 19.5°, and an angle of diffraction of the 110 characteristic diffraction peak ranges from 65° to 66.5°.

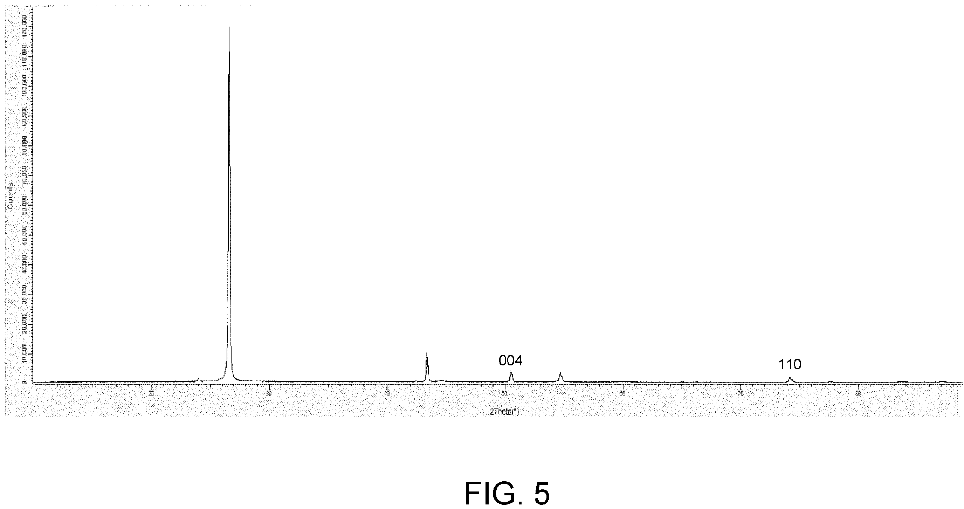

In some embodiments, the degree of orientation of the negative electrode sheet may be 10 to 60, for example, the degree of orientation of the negative electrode sheet may be 10, 15, 20, 25, 30, 35, 40, 45, 50, 55, or 60. Herein, as shown in FIG. 5, the degree of orientation of the negative electrode sheet is Qc=C004/ C110. C004 is a peak area of the 004 characteristic diffraction peak in the X-ray diffraction spectrum of the negative electrode sheet, and C110 is a peak area of the 110 characteristic diffraction peak in the X-ray diffraction spectrum of the negative electrode sheet. An angle of diffraction of the 004 characteristic peak ranges from 54° to 56°, and an angle of diffraction of the 110 characteristic diffraction peak ranges from 76° to 78°.

The inventors find that when the degree of orientation of the positive electrode sheet is 70 to 99 and the degree of orientation of the negative electrode sheet is 10 to 60, the dynamic performance of the positive electrode sheet and the negative electrode sheet reaches the best. Lithium ions may be smoothly deintercalated from the positive and negative electrode sheets, so the charge and discharge performance, cycle performance, and safety performance of the lithium-ion battery are improved.

In the disclosure, the positive electrode sheet is subjected to XRD scanning test in accordance with the JIS K 0131-1996 standard, and the negative electrode piece is subjected to the XRD scanning test in accordance with the JB/T4220-2011 standard. For instance, a placed electrode sheet is X-ray scanned at a scanning speed of (1/4)°/min, and a slit with a width of 0.2 mm is used to scan and receive X-ray diffracted light at different diffraction angles to obtain the X-ray spectrum of the test electrode sheet. Herein, in the positive electrode sheet, the angle of diffraction of the 003 diffraction characteristic peak ranges from 17° to 19.5°, and the angle of diffraction of the 110 diffraction characteristic peak ranges from 65° to 66.5°. In the negative electrode sheet, the angle of diffraction of the 004 diffraction characteristic peak ranges from 54° to 56°. In the negative electrode sheet, a scanning range of the angle of diffraction of the 110 diffraction characteristic peak is 76° to 78°.

In some embodiments, a compaction density of the positive electrode sheet is 3.0 g/cm$^3$ to 3.6 g/cm$^3$, for example, it may be 3.0 g/cm$^3$, 3.1 g/cm$^3$, 3.2 g/cm$^3$, 3.3 g/cm$^3$, 3.4 g/cm$^3$, 3.5 g/cm$^3$, or 3.6 g/cm$^3$. A surface density of the positive electrode sheet coated on one side is 0.014 g/cm$^2$ to 0.02 g/cm$^2$, for example, it may be 0.014 g/cm$^2$, 0.015 g/cm$^2$, 0.016 g/cm$^2$, 0.017 g/cm$^2$, 0.018 g/cm$^2$, 0.019 g/cm$^2$, or 0.020 g/cm$^2$.

In some embodiments, a compaction density of the negative electrode sheet is 1.1 g/cm$^3$ to 1.7 g/cm$^3$, for example, it may be 1.1 g/cm$^3$, 1.2 g/cm$^3$, 1.3 g/cm$^3$, 1.4 g/cm$^3$, 1.5 g/cm$^3$, 1.6 g/cm$^3$, or 1.7 g/cm$^3$. A surface density of the negative electrode sheet coated on one side is 0.008 g/cm$^2$ to 0.013 g/cm$^2$, for example, it may be 0.008 g/cm$^2$, 0.009 g/cm$^2$, 0.010 g/cm$^2$, 0.011 g/cm$^2$, 0.012 g/cm$^2$, or 0.013 g/cm$^2$.

It should be noted that in the disclosure, the compaction densities and surface densities of the positive electrode sheet and the negative electrode sheet are single-sided values, and the testing method can refer to the conventional testing methods used by a person having ordinary skill in the art. For example, the surface density of the electrode sheet is obtained by testing first, and the surface density is then divided by the thickness of the electrode sheet to obtain the compaction density of the electrode sheet.

Further, the inventors find through research that when a lithium-ion battery containing a composite positive electrode material (i.e., the positive electrode material contains both the first active material and the second active material) satisfies the above multiple parameter constraints, the charge and discharge performance, cycle performance, and safety performance of the obtained lithium-ion battery reach the best state, the actual use needs are satisfied, and costs of use are low.

The composition and preparation method of the secondary battery provided by the disclosure are described in detail below.

In the preparation of the positive electrode sheet, the positive electrode material, a conductive agent, and a binder were mixed according to the mass ratio of (90 to 99): 1.5:1.5, the preferable mass ratio is 97:1.5:1.5, a solvent N-methylpyrrolidone (NMP) was added, the mixture was thoroughly stirred, and a positive electrode slurry was obtained. The positive electrode slurry was coated on a positive electrode current collector aluminum foil, and the positive electrode sheet was prepared through processes such as drying, cold pressing, and slitting. Herein, the conductive agent could be selected from at least one conductive material such as Super P (carbon black), acetylene black, carbon nanotubes (CNT), graphene, and nano carbon fiber (VGCF). For instance, the conductive agent was SP and CNT, and the mass ratio of SP and CNT was 1 :0.5. The binder could be selected from at least one of PVDF, PTFE, etc.

Herein, the method of preparing the positive electrode material included the following steps.

The first active material and the second active material were uniformly mixed according to the mass ratio (70~95):(5~30), and a mixture was obtained. The mixture was rolled, and the positive electrode material was obtained. Herein, the first active material is a layered structure material, such as lithium cobalt oxide, lithium nickel cobalt manganate, or lithium nickel cobalt aluminate. The second active material is an olivine structure material, such as lithium iron phosphate or lithium iron manganese phosphate.

In the preparation of the negative electrode sheet, the negative electrode materials such as graphite, conductive agent acetylene black, thickener CMC sodium carboxymethyl cellulose) and binder SBR (styrene-butadiene rubber) were mixed at a mass ratio of 96.4:1:1.2:1.4 and stirred thoroughly after deionized water was added, and a negative electrode slurry was obtained. The negative electrode slurry was uniformly coated on a negative electrode current collector copper foil, and the negative electrode sheet was prepared through processes such as drying, cold pressing, and slitting.

In the preparation of the separator, a material was PE or PP porous membrane as the separator, preferably PP/PE/PP porous membrane, with a thickness of 9 $\mu$m to 18 $\mu$m (e.g., 9 $\mu$m, 12 $\mu$m, 16 $\mu$m, or 18 $\mu$m), an air permeability of 180 s/100mL to 380 s/100mL (e.g., 180 s/100mL, 280 s/100mL, or 380 s/100mL), and a porosity of 30% to 50% (e.g., 30%, 40%, or 50%).

In the preparation of the electrolyte, EC (ethylene carbonate), DMC (dimethyl carbonate), and EMC (ethyl methyl carbonate) were mixed according to mass ratio of 1:1:1 to obtain an organic solvent. Next, the fully dried lithium salt $LiPF_6$ was dissolved in the abovementioned organic solvent, and the electrolyte with a concentration of 1 mol/L was prepared.

In the assembly of the battery, the prepared positive electrode sheet, the separator, and negative electrode sheet were stacked in sequence, so that the separator was between the positive and negative electrode sheets to provide the function of isolation. It was then covered with an aluminum plastic film, dried and then injected with the electrolyte prepared above. After encapsulating, standing, forming, and other processes, a pouch battery (i.e., a lithium-ion battery) with a capacity of 1 Ah was finally obtained.

The specific steps and conditions for forming the electrolyte are provided as follows. After being injected, the electrolyte was kept in a hot pressure environment of 0.1 MPa, was charged at 0.02 C for 17 minutes at 45°C in a static state, and then charged to 0.3 Ah at 0.02 C after standing for 5 minutes. The air bag was then cut off and vacuum-sealed, the electrolyte was left at room temperature for 48 hours, and the formation of the electrolyte was then completed.

The technical solutions of the disclosure are going to be described in detail below through several specific examples and comparative examples. Unless otherwise stated, the raw materials and reagents used in the following examples are commercially available or can be prepared by conventional methods in the art.

Example 1

A secondary battery is provided in this example, and a process of preparing the secondary battery is provided as follows.

(1) In the preparation of a positive electrode sheet, a positive electrode material, conductive agent carbon black (Super P), and binder polyvinylidene fluoride (PVDF) were mixed at a weight ratio of 97:1.5 :1.5. The mixture was added with solvent N-methylpyrrolidone (NMP) and stirred thoroughly, and a positive electrode slurry was obtained. Under the action of a vacuum mixer, stirring was performed until the system becomes uniform and transparent, and the positive electrode slurry was obtained. The positive electrode slurry was evenly coated on a 16 $\mu$m aluminum foil current collector. The aluminum foil current collector was dried at room temperature, transferred to an oven to be dried at 80°C to 120°C for 6 hours, and then cold pressed and slit, and the positive electrode sheet was obtained.

Herein, the positive electrode material included lithium nickel cobalt manganate ($LiNi_{0.8}Co_{0.1}Mn_{0.1}O_2$, NCM) with a mass ratio of a 95wt% and lithium iron phosphate ($LiFePO_4$, LFP) with a mass ratio of b 5wt%. The method of preparing the positive electrode material included the following steps. The first active material NCM and the second active material LFP were uniformly mixed at a mass ratio of 95:5 to obtain a mixture, the mixture was then rolled, and the positive electrode material was obtained.

(2) In the preparation of a negative electrode sheet, negative electrode material graphite, conductive agent acetylene black, thickener sodium carboxymethylcellulose (CMC), and binder styrene-butadiene rubber (SBR) were mixed at a mass ratio of 96.4:1:1.2:1.4, and then deionized water was added. The solid content of the slurry was adjusted to 55%, and then the negative electrode slurry was obtained by fully stirring and mixing under the action of a vacuum mixer. The negative electrode slurry was evenly coated on both sides of an 8 $\mu$m negative electrode current collector copper foil, dried at room temperature, transferred to an oven for drying, and then subjected to cold pressing, slitting, and other processes, and the negative electrode sheet was obtained.

(3) In the preparation of an electrolyte, in an argon atmosphere glove box with a water content of <10 ppm, ethylene carbonate (EC), ethyl methyl carbonate (EMC), and diethyl carbonate (DEC) were mixed according to a volume ratio of 1:1:1 to obtain an organic solvent. Next, the fully dried lithium salt $LiPF_6$ was dissolved in the abovementioned organic solvent, and the electrolyte with a concentration of 1 mol/L was prepared.

(4) In the preparation of a separator, the separator was a 9 $\mu$m polyethylene separator coated on both sides with a ceramic coating thickness of 2 $\mu$m.

(5) In the assembly of a battery, the obtained positive electrode sheet, the separator, and negative electrode sheet were stacked in sequence, so that the separator was between the positive and negative electrode sheets to provide the function of isolation. It was then covered with aluminum-plastic film, transferred to a vacuum oven at 120°C to dry, and sealed after injecting 3.0 g/Ah of electrolyte. After standing still, hot and cold pressing, formation, fixture, grading, and other processes, a pouch battery (i.e., a lithium-ion battery) with a capacity of 1 Ah was finally obtained.

The specific steps and conditions for forming the electrolyte are provided as follows. After being injected, the electrolyte was kept in a hot pressure environment of 0.1 MPa, was charged at 0.02 C for 17 minutes at 45°C in a static state, and then charged to 0.3 Ah at 0.02 C after standing for 5 minutes. The air bag was then cut off and vacuum-sealed, the electrolyte was left at room temperature for 48 hours, and the formation of the electrolyte was then completed.

Example 2

A secondary battery with the same system as Example 1 is provided in this example, and the difference between this example and Example 1 is that: the positive electrode material in the positive electrode sheet includes lithium nickel cobalt manganate ($LiNi_{0.8}Co_{0.1}Mn_{0.1}O_2$, NCM) with a mass ratio of a of 90 wt% and lithium iron phosphate ($LiFePO_4$, LFP) with a mass ratio of b of 10 wt%.

Example 3

A secondary battery with the same system as Example 1 is provided in this example, and the difference between this example and Example 1 is that: the positive electrode material in the positive electrode sheet includes lithium nickel cobalt manganate ($LiNi_{0.8}Co_{0.1}Mn_{0.1}O_2$, NCM) with a mass ratio of a of 85 wt% and lithium iron phosphate ($LiFePO_4$, LFP) with a mass ratio of b of 15 wt%.

Example 3

A secondary battery with the same system as Example 1 is provided in this example, and the difference between this example and Example 1 is that: the positive electrode material in the positive electrode sheet includes lithium nickel cobalt manganate ($LiNi_{0.8}Co_{0.1}Mn_{0.1}O_2$, NCM) with a mass ratio of a of 85 wt% and lithium iron phosphate ($LiFePO_4$, LFP) with a mass ratio of b of 15 wt%.

Example 4

A secondary battery with the same system as Example 1 is provided in this example, and the difference between this example and Example 1 is that: the positive electrode material in the positive electrode sheet includes lithium nickel cobalt manganate ($LiNi_{0.8}Co_{0.1}Mn_{0.1}O_2$, NCM) with a mass ratio of a of 80 wt% and lithium iron phosphate ($LiFePO_4$, LFP) with a mass ratio of b of 20 wt%.

Example 5

A secondary battery with the same system as Example 1 is provided in this example, and the difference between this example and Example 1 is that: the positive electrode material in the positive electrode sheet includes lithium nickel cobalt manganate ($LiNi_{0.8}Co_{0.1}Mn_{0.1}O_2$, NCM) with a mass ratio of a of 75 wt% and lithium iron phosphate ($LiFePO_4$, LFP) with a mass ratio of b of 25 wt%.

Example 6

A secondary battery with the same system as Example 1 is provided in this example, and the difference between this example and Example 1 is that: the positive electrode material in the positive electrode sheet includes lithium nickel cobalt manganate ($LiNi_{0.8}Co_{0.1}Mn_{0.1}O_2$, NCM) with a mass ratio of a of 70 wt% and lithium iron phosphate ($LiFePO_4$, LFP) with a mass ratio of b of 30 wt%.

Comparative Example 1

A secondary battery with the same system as Example 1 is provided in this comparative example, and the difference between this comparative example and Example 1 is that: the positive electrode material includes only the first active material lithium nickel cobalt manganate ($LiNi_{0.8}Co_{0.1}Mn_{0.1}O_2$, NCM) without being mixed with the second active material lithium iron phosphate ($LiFePO_4$, LFP).

A discharge test and a nail penetration test were performed on the secondary batteries prepared in Examples 1 to 6 and Comparative Example 1 to verify the safety performance differences of the secondary batteries provided by different Examples and Comparative Example.

Discharge Curve Test:

At 25°C, the secondary battery was charged at a constant current rate of 0.1C to the upper limit cut-off voltage, charged at a constant voltage until the current was <0.05C, left to stand for 10 minutes, and then discharged at a constant current of 0.1C to the lower limit cut-off voltage. The discharge capacity curve at this time was the discharge curve.
In the nail penetration test, the secondary battery was fully charged to 100% SOC. A $\Phi$8mm steel needle was used to pierce the secondary battery at a speed of 25mm/s. After 1 hour of observation, the maximum temperature of the secondary battery cell was collected. If the secondary battery did not catch fire, it passed the nail penetration test. If the secondary battery caught fire, the time elapsed from piercing to fire catching was recorded.

Measured Voltage Test:

The secondary battery was discharged at a standard rate of 1C. The measured voltage was obtained by dividing the energy released by the secondary battery by its capacity.
The test results of the secondary batteries in Examples 1 to 6 and Comparative Example 1 are shown in Table 1.

Table 1: Discharge performance and safety performance tests of the secondary batteries in Examples 1 to 6 and Comparative Example 1

| | Positive electrode material | Measured voltage/V | NCM discharge curve ratio | LFP discharge curve ratio | Maximum temperature of nail penetration/°C | Time of fire of nail penetration |
|---|---|---|---|---|---|---|
| Comparative Example 1 | NCM | 3.74 | 100% | 0% | 549 | 50 |
| Example 1 | 95%NCM +5%LFP | 3.72 | 96% | 4% | 210 | 1300 |
| Example 2 | 90%NCM +10%LFP | 3.70 | 92% | 8% | 170 | no fire |
| Example 3 | 85%NCM +15%LFP | 3.68 | 87% | 13% | 100 | no fire |
| Example 4 | 80%NCM +20%LFP | 3.66 | 83% | 17% | 30 | no fire |
| Example 5 | 75%NCM +25%LFP | 3.63 | 79% | 21% | 29 | no fire |
| Example 6 | 70%NCM +30%LFP | 3.61 | 75% | 25% | 28.5 | no fire |

Comparing the test results of Examples 1 to 6 and Comparative Example 1, it can be seen that mixing LFP into the positive electrode material mainly composed of NCM can effectively improve the thermal stability of the positive electrode material and significantly improve the safety performance of the secondary battery. Herein, adding LFP to the positive electrode material can introduce LFP to participate in the second voltage platform of discharge during the discharge process of the secondary battery. In this way, the discharge depth of the layered structure material is effectively reduced under the high voltage platform, the structural thermal stability of the positive electrode material is improved, and the thermal runaway temperature of the battery is prevented from rapidly falling due to excessive discharge. The safety performance of the secondary battery is thereby significantly improved.
Comparing the test results of Examples 1 to 6, it can be seen that as the mass ratio b of the LFP material added to the positive electrode material increases, the curve ratio of the secondary battery in the discharge curve in which NCM participates in discharge decreases. The curve ratio in which LFP participates in discharge increases accordingly, and the maximum temperature during the nail penetration process of the secondary battery also decreases significantly. For instance, when the mass ratio b of LFP material in the positive electrode material increases from 5 wt% to 20 wt%, the maximum temperature of the secondary battery in the nail penetration process decreases from 210°C to 30°C.
Further, it can be seen from the test results of Examples 3 to 6 that when the mass ratio b of LFP is greater than 20wt%, increasing the mass content of LFP in the positive electrode material has no obvious effect on improving the thermal safety performance of the secondary battery. Instead, it may further reduce the measured voltage of the secondary battery during discharge. For instance, when the mass ratio b of LFP material in the positive electrode material increases from 20 wt% to 30 wt%, the maximum temperature of the secondary battery in the nail penetration process only drops from 30°C to 28.5°C, while the measured voltage of the secondary battery continues to decrease from 3.66V to 3.61V. It can be seen that in the positive electrode material, the mass ratio b of the second active material LFP is preferably 20wt%. The positive electrode material with this mass ratio may achieve the best improvement effect on the thermal safety performance of the secondary battery on the premise of ensuring that the measured voltage of the secondary battery may not be significantly attenuated.

**Claims**

1. A secondary battery, **characterized in that**, comprising a positive electrode sheet, a separator, an electrolyte and a negative electrode sheet, wherein the positive electrode sheet comprises a positive electrode material comprising:

   a first active material being a layered structure material; and
   a second active material being an olivine structure material,
   wherein a mass ratio of the second active material to a sum of masses of the first active material and the second active material is 5 wt% to 30 wt%, a discharge curve of the secondary battery has a first voltage platform and a second voltage platform, a measured voltage y of the secondary battery satisfies a relationship of $y1_{min} < y < y1_{max}$ or $y2_{min} < y < y2_{max}$, and y1 and y2 satisfy formulas (1) and (2):

$$y1 = 0.5265a + d \qquad (1)$$

$$y2 = -0.5265b + c \qquad (2),$$

   where a is a mass ratio of the first active material to the sum of the masses of the first active material and the second active material, b is the mass ratio of the second active material to the sum of the masses of the first active material and the second active material, c is the first voltage platform where the first active material participates in discharge, the first voltage platform is 3.7143 V to 3.7743 V, d is the second voltage platform where the second active material participates in discharge, and the second voltage platform is 3.1878V to 3.2478V.

2. The secondary battery according to claim 1, wherein a curve ratio specific value of the second active material participating in discharge in the discharge curve is 80% to 87% of the mass ratio b.

3. The secondary battery according to claim 2, wherein a curve ratio of the second active material participating in the discharge curve is 4% to 25%.

4. The secondary battery according to claim 1, wherein the layered structure material is $LiNi_xCo_yM_{1-x-y}O_2$, where $0<x<1$, $0<y<1$, and the M element comprises one or more of Mn, Ti, Zr, Al, Sn, Zn, Mg, Cu, In, Ga, and Ta.

5. The secondary battery according to claim 1, wherein the olivine structure material is $LiFe_zG_{1-z}PO_4$, where $0<z<1$, and the G element comprises one or more of Mn, Ti, Zr, Al, Sn, Zn, Mg, Cu, In, Ga, and Ta.

6. The secondary battery according to claim 1, wherein an average particle size D50 of the first active material is 0.5 $\mu$m to 5 $\mu$m, and an average particle size D50 of the second active material is 0.3 $\mu$m to 3 $\mu$m.

7. The secondary battery according to claim 1, wherein the first active material is single crystal and/or polycrystalline.

8. The secondary battery according to claim 1, wherein a degree of orientation of the positive electrode sheet is 70 to 99, and a degree of orientation of the negative electrode sheet is 10 to 60.

9. The secondary battery according to claim 1, wherein a compaction density of the positive electrode sheet is 3.0 g/cm$^3$ to 3.6 g/cm$^3$, and a surface density of the positive electrode sheet coated on one side is 0.014 g/cm$^2$ to 0.02 g/cm$^2$.

10. The secondary battery according to claim 1, wherein a compaction density of the negative electrode sheet is 1.1 g/cm$^3$ to 1.7 g/cm$^3$, and a surface density of the negative electrode sheet coated on one side is 0.008 g/cm$^2$ to 0.013 g/cm$^2$.

11. The secondary battery according to claim 1, the negative electrode sheet includes a negative electrode material, and the negative electrode material is a carbon-based material, a silicon-based material, or a carbon-silicon composite material.

12. The secondary battery according to claim 11, the negative electrode material is graphite, hard carbon, soft carbon, or silicon oxide.

13. The secondary battery according to claim 1, the electrolyte comprises EC, DMC, or EMC, and lithium salt comprising $LiPF_6$, and the separator comprising PE, PP or PP/PE/PP composite film.

14. The secondary battery according to claim 1, a preparation of the positive electrode sheet is by mixing the positive electrode material, a conductive agent, and a binder according to a mass ratio of (90 to 99): 1.5:1.5, a solvent N-methylpyrrolidone (NMP) was added, the mixture was thoroughly stirred, and a positive electrode slurry was obtained, the positive electrode slurry was coated on a positive electrode current collector aluminum foil, and the positive electrode sheet was prepared through processes such as drying, cold pressing, and slitting.

15. The secondary battery according to claim 14, the conductive agent is selected from at least one conductive material including Super P (carbon black), acetylene black, carbon nanotubes (CNT), graphene, and nano carbon fiber (VGCF).

FIG. 1

Relationship between measured voltage and mass ratio of first active substance

$y = 0.5265x + 3.2478$

$y = 0.5265x + 3.2178$

$y = 0.5265x + 3.1878$

Measured voltage (V)

Mass ratio of first active substance

FIG. 2

EP 4 542 669 A1

Relationship between measured voltage and mass ratio
of second active substance

$y = -0.5265x + 3.7743$

$y = -0.5265x + 3.7443$

$y = -0.5265x + 3.7143$

Measured voltage (V)

Mass ratio of second active substance

FIG. 3

FIG. 4

FIG. 5

Europäisches
Patentamt

European
Patent Office

Office européen
des brevets

# EUROPEAN SEARCH REPORT

Application Number

EP 23 21 6324

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/256776 A1 (SAKA HIDEYUKI [JP] ET AL) 7 September 2017 (2017-09-07) * battery "B3"; paragraphs [0107], [0108], [0112], [0113], [0116], [0126]; figure 7 * ----- | 1-15 | INV. H01M4/131 H01M4/36 H01M4/58 H01M10/052 H01M10/0568 H01M10/0569 |
| A | WO 2023/200081 A1 (LG ENERGY SOLUTION LTD [KR]) 19 October 2023 (2023-10-19) * the whole document * ----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 9 August 2024 | Meini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 21 6324

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2024

| Patent document cited in search report | Publication date | Patent family member(s) | Publication date |
|---|---|---|---|
| US 2017256776 A1 | 07-09-2017 | CN 106663774 A | 10-05-2017 |
| | | DE 112015004095 T5 | 18-05-2017 |
| | | JP 6287707 B2 | 07-03-2018 |
| | | JP 2016058187 A | 21-04-2016 |
| | | KR 20170033443 A | 24-03-2017 |
| | | US 2017256776 A1 | 07-09-2017 |
| | | WO 2016038438 A1 | 17-03-2016 |
| WO 2023200081 A1 | 19-10-2023 | CN 117256059 A | 19-12-2023 |
| | | EP 4310941 A1 | 24-01-2024 |
| | | JP 2024516984 A | 18-04-2024 |
| | | KR 20230146889 A | 20-10-2023 |
| | | US 2024234723 A1 | 11-07-2024 |
| | | WO 2023200081 A1 | 19-10-2023 |

EPO FORM P0459

For more details about this annex : see Official Journal of the European Patent Office, No. 12/82